# FASCICULE DE BREVET EUROPEEN

(11) **EP 1 714 185 B1**
(45) Date de publication et mention de la délivrance du brevet: **13.08.2008**
(21) Numéro de dépôt: 05717702.4
(22) Date de dépôt: 03.02.2005
(51) Int. Cl.: G02F 1/155, B60J 3/04

(54) **PROCEDE POUR COMMANDER UN ELEMENT DE SURFACE POUVANT ETRE DECOLORE DE MANIERE ELECTROCHROME AU SEIN D'UN VITRAGE TRANSPARENT**
VERFAHREN ZUR STEUERUNG EINES ELEMENTS, DAS ELEKTROCHROMISCH INNERHALB EINES TRANSPARENTEN FENSTERS ANGESTEUERT WERDEN KANN
METHOD OF CONTROLLING A SURFACE ELEMENT THAT CAN BE ELECTROCHROMICALLY CONTROLLED

(30) Priorité: 05.02.2004 DE 102004005611
(43) Date de publication de la demande: 25.10.2006
(73) Titulaire: SAINT-GOBAIN GLASS FRANCE, 92400 Courbevoie (FR)
(72) Inventeur: FANTON, Xavier, F-93600 AULNAY SOUS BOIS (FR); CLAUDE, Laurent, F-77140 NEMOURS (FR); DUBRENAT, Samuel, F-75017 PARIS (FR); SCHUETT, Juergen, 52070 AACHEN (DE)
(74) Mandataire: Colombier, Christian
(86) Numéro de dépôt international: PCT/FR2005/050065
(87) Numéro de publication internationale: WO 2005/076061

(56) Documents cités:
- EP-A- 0 304 198
- EP-A- 0 408 427
- WO-A-93/04885
- FR-A- 2 689 655
- FR-A- 2 811 778
- US-A- 4 645 308
- US-B1- 6 621 616

## Description

L'invention se rapporte à un vitrage transparent avec un champ de vision pouvant être assombri partiellement sur une partie de sa surface par la commande électrique d'au moins un élément fonctionnel intégré dans un composite à plusieurs couches et dont la transmission de lumière est variable de façon réversible, dans laquelle l'élément fonctionnel, en particulier sous la forme d'un système à couches électrochromes de nature solide, comprend au moins une couche fonctionnelle électrochrome enfermée entre deux électrodes de surface et à un procédé pour commander un élément de surface pouvant être décoloré de manière électrochrome dans une telle vitrage transparent.

Les documents WO 93 04 885 A1 et US 4 832 468 décrivent des pare-brise de véhicule dont la bande de bord supérieure est équipée d'éléments électrochromes présentant une transparence variable réglable. De ce fait, les pare-soleil mécaniques usuels sont superflus ou au moins complétés. La bande de bord peut être pourvue sur sa largeur d'éléments à commander séparément, de sorte qu'elle ne doit pas toujours être assombrie sur toute sa surface.

Le document WO 03 007 065 A1 décrit une application d'un système à couche électrochrome de nature solide notamment pour l'objectif mentionné plus haut. Le document US 6 277 523 B1 décrit les principes chimiques et physiques de tels systèmes à couches électrochromes de nature solide.

Le document US 5 523 877 décrit de façon très détaillée différentes possibilités pour faire varier la transmission d'un vitrage feuilleté transparent à l'aide d'éléments à couches électrochromes. Le document indique également qu'il peut s'agir, pour les éléments électrochromes, de toits ouvrants, de pare-soleil ou de "bandes d'ombrage" pour des véhicules. Dans chaque cas, il faut cependant admettre que l'élément respectif puisse toujours être assombri sur toute sa surface de manière électrochrome.

Le document DE 100 46 103 A1 décrit enfin un vitrage transparent avec un équipement, qui permet de n'assombrir de façon réversible, par voie électrochrome, que certains secteurs dont la localisation dans la surface du vitrage est déterminée par une commande par capteurs. Ce document ne donne cependant aucun détail sur la réalisation technique d'un tel vitrage. En particulier, on ne voit pas comment les éléments ou les couches électrochromes doivent être déposé(e)s sur le vitrage.

Le document EP-A-0 408 427 décrit un vitrage transparent pouvant être assombri comprenant un élément électrochrome compris entre deux électrodes de surface, l'ensemble étant arrangé de telle façon que lorsqu'une tension est appliquée aux électrodes à l'aide de leurs raccords, l'assombrissement de l'élément commence à un bord de l'élément actif et se propage de manière continue sur la surface de l'élément jusqu'à sa coloration homogène complète.

Le document FR-A-2 811 778 décrit un vitrage feuilleté comportant un élément électrochromique dans lequel des fils métalliques fins sont utilisés pour connecter l'une des électrodes de surface, l'élément électrochromique n'étant formé que sur une partie de l'électrode de surface.

Le document US-A-4 645 308 décrit un vitrage transparent comportant un système actif comprenant un élément électrochrome compris entre deux électrodes de surface, l'ensemble étant arrangé de telle façon que lorsqu'une tension est appliquée aux électrodes à l'aide de leurs raccords, l'assombrissement de l'élément commence à un bord de l'élément actif et se propage de manière continue sur la surface de l'élément jusqu'à sa coloration homogène complète.

Le problème à la base de l'invention est de procurer un autre vitrage transparent, dans lequel seule une partie du champ de vision est équipée d'un élément électrochrome, et de présenter un procédé qui permet de commander cet élément électrochrome.

Conformément à l'invention, ce problème est résolu par le procédé décrit par la revendication 1.

Par la conception, la disposition et la commande électrique (locale) d'électrodes du système à couche électrochrome de nature solide (dans la suite système EC), on peut obtenir, suivant l'invention, que le changement de couleur de celui-ci (entièrement réversible) ait un effet déroulant, c'est-à-dire que le changement de couleur du système ou selon le cas de l'élément EC commence sur une de ses arêtes et se propage ensuite plus ou moins rapidement (en fonction de la tension électrique appliquée) jusqu'à l'arête opposée. Avec un échantillon expérimental, la durée nécessaire pour un changement de couleur complet avec une largeur de l'élément EC de 15 cm est inférieure à 30 secondes.

Une application particulièrement préférée de cet effet est la combinaison avec des pare-brise de véhicule dans la configuration exposée dans l'introduction. Il est possible ici de propager l'assombrissement de façon déroulante depuis l'arête supérieure du pare-brise jusqu'au bord opposé du système EC situé dans le champ de vision du vitrage.

De telles applications peuvent bien entendu être envisagées non seulement dans des véhicules routiers, mais aussi pour des vitrages d'avions, de navettes spatiales, etc., de bateaux et de véhicules spéciaux, et évidemment aussi d'une manière générale pas uniquement pour des vitrages avant ou des pare-brise, mais aussi pour des vitrages latéraux ou des lunettes arrière. En outre, on peut également imaginer d'autres applications, en particulier dans le secteur de la construction.

Selon l'invention, l'éclaircissement se propage en sens contraire de l'assombrissement, à savoir du bas vers le haut, de sorte qu'il apparaît à nouveau un effet déroulant. Abstraction faite de l'aspect esthétique d'une telle forme de réalisation, cette dynamique des opérations de changement de couleur pourrait être mieux acceptée par les occupants du véhicule qu'un assombrissement soudain de toute la surface, dont il faut s'accommoder lorsque l'on utilise les éléments EC connus.

Etant donné que l'opération de changement de couleur se propage en continu sur la surface de tout l'élément, aussi longtemps que la tension d'alimentation est appliquée, elle s'avère également supérieure par rapport à la subdivision connue des éléments EC en plusieurs bandes individuelles commandées séparément. Abstraction faite de cet aspect, la disposition d'autres électrodes dans la région de la surface, qui est couverte par la couche électrochrome, et la subdivision correspondante de cette couche permettent d'obtenir également avec cette technologie une subdivision en plusieurs champs commandés séparément, chacun de ces champs pouvant alors au besoin exécuter l'effet déroulant précité.

Avec une préférence particulière, la présente invention peut être utilisée avec des systèmes à couches EC de natures solides qui opèrent sur la base d'une dispersion réversible de cations dans une couche fonctionnelle électrochrome. Les différences de transmission et de couleur sont les signes extérieurs de différents états d'oxydation de la matière électrochrome (qui contient par exemple de l'oxyde de tungstène).

L'activation de la coloration et de la décoloration respectivement de l'élément EC peut être commandée à la main par des moyens de commutation appropriés. En variante ou en combinaison avec une commande manuelle des opérations de commutation, on peut également réaliser une commande par des capteurs. En l'occurrence, il peut être prévu un ou plusieurs capteurs (par exemple des photodiodes ou des convertisseurs photosensibles comparables) sur le vitrage de fenêtre lui-même équipé de l'élément EC, ou localement séparés de celui-ci. Un exemple d'une commande optimisée possible a été décrit dans le document DE 199 25 335 A1.

De toute façon on prévoira un dispositif de contrôle, électronique ou similaire, pour recevoir lesdites commandes ou consignes manuelles et/ou desdits capteurs et pour fournir les tensions d'alimentation correspondantes et appropriées aux électrodes de l'élément EC, c'est-à-dire au moins un tension pour le colorer et une autre tension pour le décolorer, ces deux tensions étant fournies à l'unique raccord de l'électrode superficielle commune (ou « supérieure », en vue de l'exemple de réalisation) et à l'un ou à l'autre des deux raccords, respectivement, de l'autre électrode superficielle (ou « inférieure »).

D'autres détails et avantages de l'objet de l'invention découlent des dessins d'un exemple de réalisation et de leur description détaillée qui suit.

Dans ces représentations simplifiées sans échelle particulière,
- la Fig. 1 est une vue d'un pare-brise de véhicule, dans laquelle la disposition d'un élément EC et de ses électrodes est montrée de façon schématique; et
- la Fig. 2 montre une coupe transversale à travers le vitrage de la Fig. 1 dans la région de l'élément EC, le long de la ligne II-II.

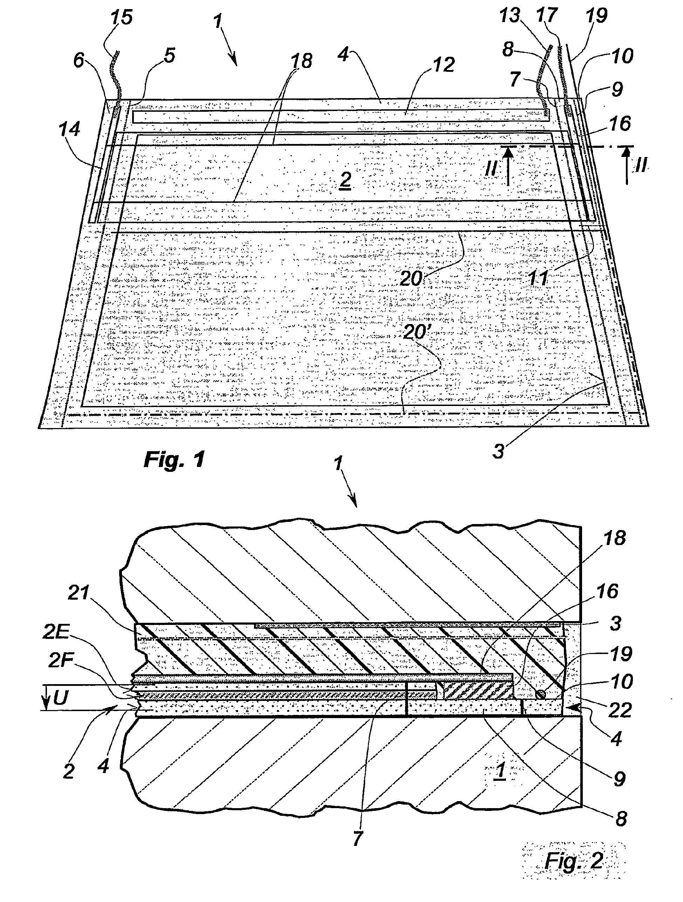

Selon la Fig. 1, dans un pare-brise 1 formé par un vitrage feuilleté avec un contour sensiblement trapézoïdal, un élément EC 2 de contour également trapézoïdal est disposé dans la région de la petite arête parallèle du trapèze sur la face du vitrage placée à l'intérieur du composite. En position montée du pare-brise, il s'étend le long du bord supérieur du vitrage avec une hauteur d'environ 15 à 20 cm. A la différence des pare-soleil conventionnels, l'élément EC 2 recouvre entièrement cette bande, même si ses bords respectent de faibles distances déterminées par rapport aux arêtes extérieures du vitrage 1.

Comme cadre périphérique 3, on a formé sur une face du vitrage situé à l'intérieur du composite une région de bord opaque qui, de manière largement répandue, sert pour masquer à la vue d'une part un collage du pare-brise 1 dans une carrosserie de véhicule et d'autre part des raccords électriques extérieurs de l'élément EC. Comme on peut le voir dans la Fig. 2, le cadre 3 et l'élément EC 2 sont disposés sur des faces différentes ou des plans différents du vitrage à l'intérieur de celui-ci.

En projection verticale sur la surface du vitrage, le cadre 3 recouvre les bords latéraux et le bord supérieur de l'élément EC 2. Le bord inférieur de celui-ci se trouve cependant dans le champ de vision du vitrage 1 entouré par le cadre 3. A la différence de la représentation simplifiée dans le dessin, on adoucira la transition entre le cadre opaque et le champ de vision par une trame de points ou analogue, les bords de l'élément EC 2 se trouvant de préférence dans la région opaque pleine.

Dans la région de surface de l'élément EC, la transmission de la lumière est, à l'état non activé, légèrement plus faible (environ 60%) que dans le champ de vision du pare-brise (où elle doit être d'au moins 75% selon une norme européenne). Ceci est indiqué par une légère tonalité grise de cette surface. Le bord inférieur de l'élément EC 2 est situé de telle façon que le champ de vision principal du pare-brise 1, défini par les dispositions d'autorisation respectives, ne soit pas affecté.

Il va de soi que l'on peut, en cas de besoin, prévoir des évidements dans la surface ou au bord de l'élément EC, par exemple lorsqu'il faut disposer derrière la région électrochrome à colorer des capteurs, une caméra ou analogue, également à base infrarouge, dont les chemins de transmission doivent traverser le vitrage 1 et pourraient être affectés par l'élément EC et/ou par les couches de celui-ci. De tels évidements peuvent avantageusement être disposés en dessous d'un support de rétroviseur intérieur collé sur la face interne du vitrage, et qui peut également contenir les capteurs précités et analogues.

Dans le présent exemple de réalisation, toute la surface du vitrage est couverte d'un revêtement transparent et électriquement conducteur 4, qui sert d'électrode de surface proche du substrat pour l'élément EC 2. Pour le fonctionnement de l'élément EC 2, il suffirait cependant en principe de prévoir le revêtement 4 uniquement sur la surface recouverte par l'élément EC, en ajoutant un faible dépassement du côté du bord.

Le revêtement total est cependant plus simplement réalisable, parce que l'on peut se passer d'un masquage partiel du substrat. Par ailleurs, le revêtement total de la surface présente l'avantage qu'il pourrait également, en étant pourvu de raccords appropriés (de façon connue en soi), être utilisé pour le chauffage du vitrage feuilleté.

Bien qu'il soit possible de déposer le revêtement avant le découpage du vitrage, il est dans le cas présent déposé, tout comme l'élément EC 2 lui-même, sur le vitrage terminé, éventuellement cintré. Il peut comprendre une couche d'oxyde d'étain et d'indium (ITO), toutefois d'autres systèmes à couche conducteurs, éventuellement composés de plus d'une couche transparente, qui ont été à plusieurs reprises décrits dans l'état de la technique, peuvent être utilisés comme électrode de surface. Le revêtement peut en outre posséder des propriétés d'isolation thermique (par réflexion de rayons infrarouges).

De préférence, ces revêtements sont déposés de façon connue en soi par pulvérisation cathodique sous champ magnétique (pulvérisation/procédé PVD) directement sur la surface du vitrage. Il est cependant également possible de les déposer par des procédés CVD.

Sur la couche d'électrode 4, on a déposé directement un système à couche électrochrome (qui peut lui-même comporter plusieurs couches) selon l'état de la technique exposé dans l'introduction, qui forme l'élément EC 2. Une autre électrode de surface transparente est encore déposée au-dessus de la couche électrochrome pour former une contre-électrode éloignée du substrat. La structure à couche de l'élément EC sera encore expliquée en détail plus loin en relation avec la Fig. 2. Ses couches peuvent dans tous les cas être déposées de façon économique par pulvérisation dans des installations industrielles.

Pour obtenir une commande électrique définie de l'élément EC au sens de la présente invention, plusieurs raccords électriques sont nécessaires. Le revêtement 4 et l'élément EC 2 sont divisés à l'aide d'une première ligne de séparation 5 et d'une seconde ligne de séparation 7 en un champ central et deux bandes latérales relativement étroites 6 et 8. Ces dernières s'étendent parallèlement aux deux petits côtés (obliques) du trapèze du vitrage et sont situées dans la surface couverte par le cadre 3.

Sur le côté droit, il est prévu le long du bord droit du vitrage 1 une autre ligne de séparation 9, qui sépare une autre bande étroite 10 du revêtement 4 de la bande latérale 8. Enfin, on voit encore, également au bord droit du vitrage 1, une courte ligne de séparation horizontale 11, qui sépare les bandes 10 et 8 du revêtement.

Toutes les lignes de séparation mentionnées ici représentent des séparations électriques totales des champs divisés, respectivement des zones de la surface divisées. Elles ne sont de préférence tracées qu'après la construction complète de l'élément EC (de préférence par érosion au faisceau laser), elles peuvent cependant aussi être tracées d'abord dans le revêtement 4 et ultérieurement dans l'élément EC 2. Pour éviter des courts-circuits, il ne peut y avoir à l'intérieur des revêtements subdivisés aucun flux de courant à travers ces lignes de séparation.

Sur la région de bord supérieure du cadre 3, il est prévu entre les lignes de séparation 5 et 7, parallèlement à l'arête supérieure du vitrage 1, une bande de raccordement allongée 12 reliée de façon électriquement conductrice au revêtement 4. Elle comporte un raccord extérieur 13 représenté de manière simplifiée sous la forme d'un câble. Par celui-ci, tout le champ du revêtement 4 situé entre les lignes de séparation 5 et 7 peut être alimenté électriquement sous la forme d'une électrode de surface de l'élément EC 2.

L'élément EC 2 comprend en outre une électrode éloignée du substrat avec les mêmes dimensions de surface que l'élément EC lui-même (donc correspondant à la surface grisée de la Fig. 1); on reviendra encore plus en détail sur celle-ci en relation avec la Fig. 2. Cette électrode ne peut comporter aucune liaison électriquement conductrice directe avec le revêtement 4. Etant donné que l'élément EC 2 ne s'étend cependant pas jusqu'à l'arête inférieure du vitrage 1, il est judicieux de disposer les contacts électriques destinés à la mise en contact de l'électrode éloignée du substrat latéralement par rapport au raccord du revêtement 4. On évite ainsi des problèmes de croisement et d'isolation qui pourraient apparaître avec une disposition des raccords extérieurs de l'électrode éloignée du substrat également sur le bord supérieur du vitrage 1. Il n'est finalement pas possible pour des raisons techniques de placer la bande de raccordement 12 sous l'élément EC 2.

Une autre bande de raccordement 14 avec un raccord extérieur 15 est dès lors disposée sur la bande latérale gauche 6, tout en étant électriquement isolée par rapport au champ principal du revêtement 4 et à la bande de raccordement 12 par la ligne de séparation 5. De manière correspondante, une troisième bande de raccordement 16 avec un raccord extérieur 17 est disposée sur la bande latérale droite 8. Ces raccords précités ont une faible résistance ohmique par comparaison avec le revêtement 4.

A l'état monté dans une carrosserie de véhicule, les bords du pare-brise sont recouverts par un revêtement intérieur, de telle façon que lesdites régions soient, même de l'intérieur, masquées à la vue.

Les deux bandes de raccordement 14 et 16 sont électriquement reliées l'une à l'autre au moyen de très fins fils métalliques 18. Ces fils métalliques 18 sont situés, à la différence des bandes de raccordement, pour une grande partie de leur longueur dans le champ de vision du pare-brise. Ils traversent la surface couverte par l'élément EC 2 et ils sont raccordés de façon électriquement conductrice à l'électrode éloignée du substrat de l'élément EC.

Les fils forment ainsi des "piquages" pour le raccordement électrique de l'électrode éloignée du substrat aux bandes de raccordement 14 et 16. On soulignera de manière explicite que deux bandes de raccordement de même polarité ne doivent pas obligatoirement être prévues de part et d'autre de l'élément EC 2, mais que l'on peut aussi en principe poser les fils à partir d'une seule bande de raccordement, par exemple avec des extrémités libres ou en formant une boucle, dans la mesure où un changement de couleur homogène de l'élément EC 2 est garanti avec l'effet déroulant désiré.

De telles dispositions des fils sont connues par nature dans des vitrages feuilletés à chauffage électrique avec des champs de fils chauffants. Les fils individuels sont tellement fins qu'ils sont pratiquement imperceptibles à l'oeil nu, et ils sont en outre masqués à la vue par la légère coloration de l'élément EC 2. Les fils se composent la plupart du temps de tungstène et ils peuvent supporter une charge mécanique élevée, de sorte qu'ils présentent la solidité nécessaire pour une pose à la machine, malgré un diamètre minimal des fils.

Enfin, il est prévu dans la région de la bande latérale extérieure droite 10 encore un autre raccord électrique 19, qui est d'abord parallèle à l'arête droite du vitrage et qui est mené en dessous de la ligne de séparation 11 dans le champ de vision du vitrage, sous la forme d'un autre fil fin 20 parallèlement à l'arête inférieure de l'élément EC, ce fil étant raccordé en liaison conductrice électrique directe avec le revêtement 4. Le raccord 19 et le fil 20 sont isolés électriquement par rapport à la bande de raccordement 16 par les lignes de séparation 9 et 11. Ils sont cependant raccordés de manière électriquement conductrice à la bande de raccordement 12 par le revêtement 4 et ils ont ainsi en principe le même potentiel électrique que celui-ci. Même si le raccord 19 n'est également représenté ici que par une ligne, il peut cependant aussi être réalisé sous la forme d'une bande de raccordement dans la région du cadre opaque au cas où la largeur disponible est suffisante.

Pour des raisons de clarté, les distances mutuelles entre le bord inférieur de l'élément EC, la ligne de séparation 11 et la partie horizontale du raccord 19 sont exagérément agrandies. Dans un vitrage produit en série, on amènera la partie horizontale 20 du raccord 19 aussi près que possible de l'arête inférieure de l'élément EC 2.

A ce stade, on soulignera qu'il peut être prévu plus de deux fils 18 et plus d'un fil 20, si une alimentation en surface aussi uniforme que possible des tensions et des courants de fonctionnement de l'élément EC dans les deux électrodes de surface l'exige.

Si, comme on le discute ici, le revêtement 4 recouvre entièrement toute la surface du vitrage, le raccord de fil 19/20 - ou au lieu de celui-ci aussi une bande de raccordement plus large analogue à la bande de raccordement 12 - peut en principe aussi être disposé à l'arête inférieure du vitrage 1, à nouveau dans la surface recouverte par le cadre 3 à l'extérieur du champ de vision du vitrage 1, comme cela est indiqué en traits mixtes 20' dans la Fig. 1. Pourtant, le comportement de réponse de l'élément EC 2 lors de l'éclaircissement peut ainsi se retarder plus fortement par rapport à l'enclenchement des tensions de commutation que pour la réalisation indiquée en trais pleins, parce que, en raison de la résistance de surface non négligeable du revêtement 4, même lorsque le potentiel est appliqué au revêtement, la tension d'alimentation ne peut augmenter que de manière ralentie au travers de la couche EC. On voit qu'à proximité de l'angle supérieur droit du vitrage feuilleté 1, trois raccords électriques 13, 17 et 19 sont très étroitement regroupés, tandis que le raccord électrique 15 est disposé dans l'angle supérieur gauche. Il est bien entendu possible de relier directement l'un à l'autre les raccords de même polarité 13 et 15, en prévoyant - de préférence - dans la région de la surface ou la bande latérale couverte par le cadre opaque 3, parallèlement à la bande de raccordement 12, une ligne de liaison directe entre eux. Celle-ci doit pourtant être électriquement isolée par rapport à la région de surface du revêtement 4 située entre les bandes latérales 6 et 8. On pourrait à cet effet prévoir par exemple un câble plat, qui comprend (au moins) une piste conductrice électrique sur un support (plastique) non conducteur. Au total, il faut chercher à rassembler en un endroit tous les raccords extérieurs de l'élément EC (et éventuellement d'autres éléments fonctionnels électriques du vitrage 1) et les mettre en contact avec le circuit électrique du véhicule ou avec une commande électronique, le cas échéant à l'aide d'un connecteur multiple ou d'un raccord brasé multiple.

Faisant référence à la Fig. 2, on expose à présent la structure interne du pare-brise composite 1 vu en coupe transversale le long de la ligne de coupe II-II de la Fig. 1. Des composants identiques sont pourvus des mêmes repères numériques que dans la Fig. 1. On reconnaît deux vitrages individuels rigides 1 (en verre ou en matière synthétique) ainsi qu'une couche de colle 21, électriquement isolante, visuellement transparente, qui les assemble l'une à l'autre de façon adhésive de la manière usuelle. Cette dernière est divisée horizontalement par un trait mixte, afin d'indiquer qu'elle est en réalité nettement plus épaisse que l'élément EC 2 ou que les couches individuelles de celui-ci. La matière de la couche de colle doit être choisie en fonction de sa compatibilité avec la réalisation des couches de l'élément EC 2.

On trouve des références correspondantes dans la littérature mentionnée dans l'introduction. A cause de leurs fortes propriétés hygroscopiques, les films adhésifs usuels en PVB sont moins pris en considération ici. On préfère actuellement des films adhésifs en polyuréthanne thermoplastiques, on peut cependant envisager également d'autres matériaux. La couche fonctionnelle de l'élément EC 2 nécessite une teneur en eau déterminée, qui ne peut pas lui être enlevée par la matière du film.

A l'état monté comme pare-brise de véhicule, le vitrage supérieur dans la Fig. 2 est placé à l'extérieur, le vitrage inférieur est tourné vers l'habitacle intérieur du véhicule. On voit sur le bord droit la position du cadre 3 sur la surface du vitrage supérieur situé à l'intérieur du composite (dans le jargon des praticiens, sur la face 2 du vitrage feuilleté). Sur la face interne qui lui fait face du vitrage inférieur (face 3), le revêtement 4 est déposé directement comme électrode inférieure de l'élément EC 2. Pour réduire encore davantage le risque précité de déshydratation de l'élément EC, la couche de colle 21 du vitrage feuilleté peut être scellée par une étanchéité périphérique extérieure 22 (par exemple une masse de butyle).

Sur le bord gauche de la coupe, il se trouve sur le revêtement 4 une couche fonctionnelle 2F et au-dessus de celle-ci une autre électrode de surface 2E de l'élément EC 2; elles s'étendent vers la droite jusqu'au-delà de la ligne de séparation 7, mais se terminent cependant avant la ligne de séparation 9, qui sont indiquées par des traits verticaux. La couche fonctionnelle 2F est représentée ici de façon simplifiée sous forme d'une couche unique; en réalité, elle se compose de plusieurs couches individuelles, sur lesquelles il n'est cependant pas nécessaire de revenir en détail ici, parce qu'elles peuvent être considérées comme connues.

On voit que la ligne de séparation 7 traverse toutes les couches de l'élément EC 2, à savoir l'électrode de surface 2E, la couche fonctionnelle 2F et le revêtement 4, et sépare électriquement celles-ci de la bande latérale 8. Il serait cependant également possible d'interrompre le revêtement 4 et les couches de l'élément EC 2 avec un décalage latéral. Un court-circuit par ces lignes de séparation ne serait alors pas non plus acceptable, parce que la couche fonctionnelle 2F de l'élément EC présente une conductibilité anisotrope, c'est-à-dire qu'elle présente une résistance beaucoup plus élevée dans le sens de sa surface que dans le sens de la normale (directement entre les électrodes de surface 4 et 2E).

Seul le fil 18 franchit cette ligne de séparation et représente ainsi la liaison électrique conductrice entre l'électrode de surface 2E et la bande de raccordement 16 (s'il est prévu plusieurs fils 18 selon la Fig. 1, chacun d'eux doit naturellement être prolongé au-delà de la ligne de séparation). Une liaison directe de la bande latérale 8 respectivement de la bande de raccordement 16 avec la région centrale de la surface - entourée par le cadre 3 - du revêtement 4 est évitée par la ligne de séparation 7. On pourrait certes imaginer de prévoir la ligne de séparation 7 (et la ligne de séparation 5 qui lui correspond sur l'autre côté) exactement à côté de l'extrémité latérale de l'élément EC, ceci est cependant plus coûteux que la réalisation représentée ici et n'apporte aucun avantage technique/électrique.

Le fil 18 franchit également la différence de hauteur, inévitable dans la configuration réelle d'un tel vitrage, entre les bandes de raccordement 16 respectivement 14 (relativement plus épaisses) et l'élément EC 2 plus mince.

Pour la préparation des raccords électriques, le film adhésif 21 est équipé avant l'assemblage des couches individuelles du vitrage feuilleté. Sur sa face placée sur l'élément EC 2 en position de montage, il porte en particulier les bandes de raccordement 12, 14, 16, les fils 18, 19 et 20, le cas échéant aussi les raccords extérieurs 13, 15 et 17, dans la mesure où ceux-ci sont introduits dans le composite, chaque fois dans les positions visibles dan la Fig. 1. Il est en outre possible de prévoir certains guidages de lignes au dos de ce film, par exemple la liaison directe mentionnée plus haut entre les bandes de raccordement 14 et 16, éventuellement aussi la ligne 19.

Les fils 18 peuvent être raccordés d'une manière électriquement conductrice aux bandes de raccordement 14 et 16 par brasage respectivement par incorporation dans une couche de brasage; ceci est également valable pour une liaison éventuellement nécessaire entre des lignes 19 et 20 réalisées séparément. Toutes les pièces de raccordement sont finalement fixées mécaniquement de manière sûre et permanente et mises en contact électrique après la pose de la couche de colle 21 et du deuxième vitrage individuel du composite, sous l'action de la chaleur et de la pression (par exemple dans un autoclave). En l'occurrence, la bande de raccordement 12 et le fil 20 se retrouvent en contact suffisamment étroit avec le revêtement 4, et les fils 18 en contact avec l'électrode 2E.

S'il faut empêcher une corrosion du revêtement 4 au départ du bord du vitrage, on terminera le revêtement 4 déjà avant l'arête extérieure du vitrage. S'il a été déposé provisoirement sur toute la surface, comme déjà mentionné plus haut, il doit alors de nouveau être enlevé le long des arêtes du vitrage avec des procédés adéquats connus en soi. Dans le cas d'un revêtement ITO, un tel nettoyage des bords n'est pas absolument nécessaire. Cependant, une obturation extérieure avec l'étanchéité 22 est également nécessaire dans ce cas. De même, les lignes de séparation 5 et 7 forment déjà une certaine protection à l'égard d'une pénétration de la corrosion.

On exposera à présent ci-dessous le mode de fonctionnement de l'élément EC et de ses raccords. D'une manière générale, il faut prévoir pour le fonctionnement de l'élément EC une commande électronique (non représentée), par exemple du type décrit dans le document DE 199 25 335 A1, qui peut fournir à différentes sorties des niveaux de tension positive et négative bien déterminés. Le cas échéant, cette commande est également reliée à des capteurs, qui peuvent commander un assombrissement automatique de l'élément EC, par exemple en cas de risque d'éblouissement lorsque le soleil est bas sur l'horizon.

Lors du processus d'assombrissement, la bande de raccordement 12 est utilisée comme électrode positive pour l'application d'une tension positive au revêtement 4. Etant donné qu'elle présente une faible résistance ohmique par rapport à ce dernier, son potentiel électrique se communique sur toute sa longueur au revêtement 4, lors de l'application de la tension, ladite tension ne peut augmenter que relativement lentement le long de la surface du revêtement 4 (qui présente par exemple une résistance d'environ 6-7 ohm/unité de surface).

Dans le cas de l'exemple, l'électrode de surface 2E a en outre été déposée volontairement avec une résistance de surface d'environ 60-70 ohm/unité de surface, qui est donc nettement plus grande que la résistance de surface du revêtement 4. Ceci peut être influencé et commandé, lors du dépôt du revêtement par pulvérisation, par un réglage approprié des paramètres de travail ainsi que par la composition de la matière de cette couche d'électrode.

La couche fonctionnelle à conductibilité anisotrope 2F présente une résistance électrique très faible perpendiculairement aux électrodes de surface 2E et 4.

On peut indiquer comme suit les rapports des résistances: R2F « R4 < R2E, où R représente chaque fois la résistance ohmique. On peut par conséquent tabler sur un échange de charges pratiquement immédiat à l'instant où une tension suffisamment haute (différence de potentiel à travers la couche fonctionnelle 2F) existe dans n'importe quelle région entre les électrodes 4 et 2E.

Cette tension (désignée sur le bord gauche par la flèche et U entre le revêtement 4 et l'électrode de surface 2E) provoque par l'échange de charges un assombrissement de la couche fonctionnelle EC 2F.

D'une façon particulièrement avantageuse, la tension est choisie de telle manière que - en collaboration avec la détermination soigneuse des résistances des couches des électrodes de surface - la couche fonctionnelle commence à s'assombrir à son bord supérieur légèrement plus étroit, de telle façon que l'on observe un effet déroulant qui se propage en quelques secondes jusqu'au bord inférieur de l'élément EC.

La différence importante de conductibilité des deux électrodes de surface 2E et 4 est considérée comme le déclencheur de l'effet déroulant souhaité conforme à l'invention. Pour une même valeur de tension, une tension d'alimentation suffisante appliquée se propagera plus rapidement dans la surface du revêtement 4 que dans la surface de l'électrode de surface 2E.

Intellectuellement, on peut se représenter la progression d'un front de tension et d'un courant élevé de changement de charge (transportant et dispersant les cations) circulant brièvement dans la couche fonctionnelle, en partant de l'endroit d'application de la tension motrice jusqu'à la fin de l'électrode de surface.

Dans l'état statique final, on atteint cependant une coloration homogène de l'élément EC sur toute la surface. Celle-ci dure aussi longtemps que la tension d'alimentation est maintenue à un niveau constant sur la couche fonctionnelle 2F ou au moins est cadencée. La décoloration (échange d'ions inversé) de la couche fonctionnelle EC 2F se produit avec un retard relatif, de sorte qu'il suffit d'une arrivée de tension cadencée.

Pour un vitrage expérimental avec un tel élément EC, on a appliqué pour l'assombrissement une tension de 1,55 V (tension continue); il en est résulté un assombrissement en moins de 30 secondes pour une hauteur de l'élément EC d'environ 15 cm.

Si la tension est supprimée entre les électrodes de surface 4 et 2E (0 V), l'élément EC 2 va de nouveau s'éclaircir peu à peu à sa tonalité naturelle essentiellement transparente, sans autres mesures, du fait que les charges électriques contribuant à l'assombrissement reviennent à nouveau à l'état initial. Le mode de fonctionnement de l'élément EC 2 correspond sensiblement à celui d'un accumulateur.

Au moyen de l'électrode supplémentaire formée par le raccord 19/20 (qui pourrait aussi, comme on l'a mentionné plus haut, être située sur le bord inférieur du vitrage 1), il est cependant possible de commander le déroulement de l'éclaircissement à partir du bord inférieur de l'élément EC 2, donc en sens inverse de l'assombrissement, avec l'effet d'un rouleau qui s'enroule.

A cet effet il est nécessaire, après la coupure de la tension sur la bande de raccordement 12, d'appliquer une tension inversée par rapport à la tension d'assombrissement U entre la portion de fil 20 (et le revêtement 4) et l'électrode de surface 2E, qui ne doit pas nécessairement avoir la même valeur que la tension d'assombrissement.

L'effet déroulant apparaît alors de nouveau par la différence des résistances de surface de la couche d'électrode 4 et de la couche d'électrode supérieure 2E. Leur résistance plus grande détermine avec quelle vitesse circule le courant qui extrait respectivement évacue à nouveau les cations hors de la couche fonctionnelle, la résistance de la couche fonctionnelle 2F étant, comme on l'a mentionné, négligeable et même encore plus faible lors du déchargement que lors de la dispersion des cations.

De même, la partie 20 du troisième raccord présente une résistance ohmique vraiment faible par comparaison avec les électrodes de surface 4 et 2E, de sorte que l'on peut observer ici le même comportement que lors de l'alimentation par la bande de raccordement 12.

Naturellement, il serait également possible d'inverser le "sens du mouvement" de l'effet déroulant, c'est-à-dire de faire commencer l'assombrissement dans le champ de vision de la vitrage de fenêtre (si la tension d'assombrissement était appliquée par le raccord 19/20), ou de faire démarrer l'assombrissement simultanément à partir de deux côtés opposés de l'élément EC par une alimentation simultanée des raccords 12 et 19/20.

Si l'on désire réaliser avec cet élément EC plusieurs champs commandés séparément, ceux-ci doivent être séparés les uns des autres par des lignes de séparation (horizontales) et être pourvus chacun de leurs propres électrodes de "piquage".

## Revendications

1. Procédé pour commander un élément fonctionnel (2) se présentant sous la forme d'un élément de surface électrochrome de nature tout solide dans un vitrage transparent, élément de surface de nature tout solide qui comprend une couche fonctionnelle (2F) pouvant être décolorée de façon réversible de manière électrochrome, insérée entre deux électrodes de surface (4, 2E), les électrodes de surface (4, 2E) étant réalisées avec des résistances de surface différentes, à partir desquelles l'augmentation de la tension d'alimentation dans la surface de ces électrodes de surface se fait à des vitesses différentes pour un même niveau de tension, au moins un conducteur de raccordement (12, 20; 14, 16) à faible résistance ohmique étant introduit de manière à être parallèle et à être placé près d'une arête latérale de l'élément fonctionnel (2), dans une des électrodes de surface (4) un potentiel électrique, effectif par rapport à l'autre électrode de surface (2E) et provoquant le changement de couleur électrochrome, sur un côté de l'élément de surface électrochrome (2) afin de commander un sens de propagation du changement de couleur de l'élément de surface électrochrome (2) **caractérisé en ce que** l'on applique à un premier raccord d'alimentation (12) de l'électrode de surface (4) un premier potentiel effectif par rapport à l'autre électrode de surface (2E) pour commander une coloration avec un sens prédéterminé de propagation du changement de couleur, et **en ce que** l'on applique à un deuxième raccord d'alimentation (20) de l'électrode de surface (4) un deuxième potentiel de polarité inverse effectif par rapport à l'autre électrode de surface (2E) pour commander une décoloration avec un sens prédéterminé de propagation du changement de couleur.

2. Procédé selon la revendication précédente dans une application pour commander un élément fonctionnel électrochrome incorporé comme pare-soleil dans un pare-brise d'un véhicule.

## Claims

1. Method for controlling a functional element (2) in the form of an all-solid-state electrochromic surface element in a transparent glazing unit, which all-solid-state surface element includes a functional layer (2F) that can be reversibly decoloured electrochromically, this being inserted between two surface electrodes (4, 2E), the surface electrodes (4, 2E) being produced with different surface resistances from which the increase in the supply voltage in the surface of these surface electrodes proceeds at different rates for any one voltage level, at least one connection conductor (12, 20; 14, 16) of low ohmic resistance being introduced so as to be parallel and to be placed near to a lateral edge of the functional element (2), in one (4) of the surface electrodes an effective electrical potential (4) relative to the other surface electrode (2E), forcing the electrochromic change of colour on one side of the electrochromic surface element (2) so as to control one direction of propagation of the change of colour of the electrochromic surface element (2) **characterized in that** a first effective potential is applied via a first supply lead (12) for the surface electrode (4) relative to the other surface electrode (2E) in order to induce a coloration in a predetermined direction of propagation of the colour change, and **in that** a second effective potential, of reverse polarity, is applied via a second supply lead (20) for the surface electrode (4) relative to the other surface electrode (2E) in order to induce a decoloration in a predetermined direction of propagation of the colour change.

2. Method according the preceding claim, in an application for controlling an electrochromic functional element incorporated as a sunscreen in the windscreen of a vehicle.

## Patentansprüche

1. Verfahren zur Steuerung eines Funktionselementes (2), das in Form eines elektrochromen Oberflächenelements mit vollständig festem Charakter in einer transparenten Verglasung vorliegt, ein Oberflächenelement mit vollständig festem Charakter, das eine Funktionsschicht (2F), die reversibel elektrochrom entfärbt werden kann und zwischen zwei Oberflächenelektroden (4, 2E) eingebaut ist, wobei die Oberflächenelektroden (4, 2E) mit unterschiedlichen Oberflächenwiderständen hergestellt sind, von welchen ausgehend die Erhöhung der Versorgungsspannung in der Oberfläche dieser Oberflächenelektroden mit unterschiedlichen Geschwindigkeiten bei ein und derselben Spannungshöhe erfolgt, und mindestens einen Anschlussleiter (12, 20; 14, 16) mit niedrigem ohmschen Widerstand, der parallel zu und in der Nähe von einer Seitenkante des Funktionselementes (2) angeordnet ist und von welchem eine der Oberflächenelektroden (4) ein elektrisches Potential angelegt wird, das in Bezug auf die andere Oberflächenelektrode (2E) wirksam ist und die Veränderung der elektrochromen Färbung auf einer Seite des elektrochromen Oberflächenelements (2) bewirkt, umfasst, um eine Ausbreitungsrichtung der Farbveränderung des elektrochromen Oberflächenelementes (2) zu steuern, **dadurch gekennzeichnet, dass** an einen ersten Versorgungsanschluss (12) der Oberflächenelektrode (4) ein erstes Potential, das in Bezug auf die andere Oberflächenelektrode (2E) wirksam ist, angelegt wird, um eine Färbung mit einer festgelegten Ausbreitungsrichtung der Farbveränderung zu steuern, und dass an einen zweiten Versorgungsanschluss (20) der Oberflächenelektrode (4) ein zweites Potential mit umgekehrter Polarität, das in Bezug auf die andere Oberflächenelektrode (2E) wirksam ist, angelegt wird, um eine Entfärbung mit einer festgelegten Ausbreitungsrichtung der Farbveränderung zu steuern.

2. Verfahren nach dem vorhergehenden Anspruch in einer Anwendung, um ein elektrochromes Funktionselement zu steuern, das als Sonnenschutz in der Frontscheibe eines Fahrzeugs eingebaut ist.
